# EUROPÄISCHE PATENTSCHRIFT

(11) **EP 2 382 102 B1**
(45) Veröffentlichungstag und Bekanntmachung des Hinweises auf die Patenterteilung: **18.05.2016**
(21) Anmeldenummer: 09767966.6
(22) Anmeldetag: 02.12.2009
(51) Int. Cl.: B29D 30/00, B60C 23/04

(54) **REIFEN EINES FAHRZEUGS MIT EINEM SENSORELEMENT**
VEHICLE TIRE HAVING A SENSOR ELEMENT
PNEUMATIQUE D'UN VÉHICULE POURVU D'UN ÉLÉMENT CAPTEUR

(30) Priorität: 29.01.2009 DE 102009006707
(43) Veröffentlichungstag der Anmeldung: 02.11.2011
(73) Patentinhaber: Bayerische Motoren Werke Aktiengesellschaft, 80809 München (DE)
(72) Erfinder: ELLMANN, Manfred, 84172 Buch am Erlbach (DE)
(74) Vertreter: Schmidt, Günter H. H.
(86) Internationale Anmeldenummer: PCT/EP2009/008577
(87) Internationale Veröffentlichungsnummer: WO 2010/085995

(56) Entgegenhaltungen:
- EP-A- 1 721 760
- WO-A-2004/005054
- DE-A1-102007 030 231

## Beschreibung

Die Erfindung betrifft einen Reifen eines Fahrzeugs, insbesondere eines Kraftfahrzeugs, mit einer Lauffläche zum Abrollen auf einer Fahrfläche und einem plattenförmigen Sensorelement, welches radial innenseitig an der Lauffläche angeordnet ist. Ferner betrifft die Erfindung ein Reifensensorelement zum Anordnen an einer Lauffläche eines Reifens eines Fahrzeugs.

Es werden derzeit von verschiedensten Reifen- sowie Elektronik-Herstellern Reifen mit Sensorelementen entwickelt. Die Sensorelemente dienen vorwiegend zum Überwachen des Reifendruckes des zugehörigen Reifens und insbesondere zum Erkennen eines plötzlichen Druckabfalls am Reifen. Dabei muss gerade der durch einen Durchstich der Reifenhülle verursachte Druckverlust an einem Reifen schnell dem Fahrer angezeigt werden, damit dieser entsprechend reagieren und z. B. das Fahrzeug auf eine niedrigere Geschwindigkeit abbremsen kann.

Bei einem Durchstich der Reifenhülle besteht aber zugleich eine durchaus relevante Wahrscheinlichkeit, dass von dem durchstechenden Gegenstand gerade das sich an der Reifenhülle befindende Sensorelement beschädigt wird.

In der EP 1 721 760 A1, die sich mit dem Problem befasst, wie ein Reifen-Sensorelement am besten an der Innenseite der Lauffläche eines Reifens befestigt werden kann, ohne dass diese Befestigung oder das Sensorelement selbst durch die normale Beanspruchung des Reifens Schaden nimmt, ist auch eine Befestigungs-Anordnung offenbart, bei der ein plattenförmiges Sensorelement im wesentlichen senkrecht zum benachbarten Laufflächenbereich angeordnet ist. Die Wahrscheinlichkeit, dass ein solchermaßen angeordnetes Sensorelement im Falle eines Reifendurchstichs vom durchstechenden Gegenstand, beispielsweise einem Nagel, getroffen wird, ist zwar geringer, als wenn das gleiche Sensorelement im wesentlichen parallel zum benachbarten Laufflächenbereich angeordnet wäre, jedoch kann eine Beschädigung des Sensors damit nicht hundertprozentig ausgeschlossen werden.

Auch die DE 10 2007 030 231 A1 befasst sich mit dem Problem, wie ein Sensorelement an der Innenseite einer Reifen-Lauffläche in einem sog. "Container" gehalten werden kann, ohne durch mechanische Beanspruchungen, die im Betriebszustand des Fahrzeugreifens auftreten, Schaden zu nehmen. Eine der mehreren hierfür vorgeschlagenen Maßnahmen sieht eine im Container angeordnete und aus einem anderen Matetrial als dieser, beispielsweise aus einem Kunststoffmaterial bestehende Unterplatte vor, die der Abfederung dient, wobei sich das Sensorelement, dort Elektronikmodul genannt, relativ zur Unterplatte bewegen kann. Schließlich beschreibt die WO 2004/005054 A1 ein austauchbares Sensorelement, dessen Antenne gekapselt ist.

Es ist Aufgabe der Erfindung einen ein Reifen-Sensorelement bzw. einen Reifen mit einem Sensorelement bereitzustellen, bei dem eine erheblich höhere Sicherheit im Hinblick auf das Erkennen eines Druckabfalls aufgrund eines Durchstechens der Reifenhülle gewährleistet werden kann.

Die Aufgabe ist erfindungsgemäß mit einem Reifen gemäß Anspruch 1 und einem Reifensensorelement gemäß Anspruch 3 gelöst. Vorteilhafte Weiterbildungen der erfindungsgemäßen Lösung sind in den abhängigen Ansprüchen beschrieben.

Erfindungsgemäß ist das Sensorelement an seiner dem benachbarten Laufflächenbereich zugewandten Seite mit einer durchstichhemmenden Schutzschicht gestaltet. Die Schutzschicht, insbesondere in Form einer metallischen Platte, sichert das Sensorelement ab und lenkt einen möglicherweise dort eindringenden Gegenstand derart ab, dass dieser das Sensorelement nicht schädigen kann. Ferner ist das Sensorelement an seiner dem benachbarten Laufflächenbereich zugewandten Seite mit einer zu diesem Laufflächenbereich schräg gestellten Außenfläche gestaltet. Die schräg gestellte Außenfläche führt zu einem verbesserten Abgleiten eines dort möglicherweise eindringenden Fremdkörpers.

Nach einer vorteilhaften Weiterbildung ist das Sensorelement an dem benachbarten Laufflächenbereich durch Fremdeinfluss klappbar gehaltert. Das klappbar gelagerte Sensorelement kann einem Fremdkörpereinfluss durch eine entsprechende Klappbewegung ausweichen.

Ferner ist entsprechend erfindungsgemäß ein Reifensensorelement zum Anordnen an einer Lauffläche eines Reifens eines Fahrzeugs geschaffen, das plattenförmig gestaltet und an einer seiner Seitenflächen mit einer durchstichhemmenden Schutzschicht gestaltet ist und an seiner dem benachbarten Laufflächenbereich zugewandten Seite mit einer zu diesem Laufflächenbereich schräg gestellten Außenfläche gestaltet ist.

Die Erfindung beruht auf der Erkenntnis, dass bei einem plattenförmigen bzw. flächigen und möglicherweise parallel zur benachbarten Lauffläche ausgerichteten Sensorelement eine relativ hohe Wahrscheinlichkeit besteht, dass das Sensorelement durch einen in die Lauffläche einstechenden Gegenstand genau in dem Moment beschädigt wird, in dem es einen gefährlichen Druckverlust anzeigen sollte. Ein defektes Reifensensorelement kann zwar nach einiger Zeit vom zugehörigen Steuergerät erkannt werden, es ist aber selbst dann nicht eindeutig, ob nur das Sensorelement ausgefallen ist oder zugleich ein Druckabfall stattgefunden hat. Ein plötzlicher Druckabfall führt aber häufig (gerade bei hohen Fahrgeschwindigkeiten) zu einem plötzlichen Reifenzerfall mit äußerst ungünstigem dynamischen Verhalten des Fahrzeugs und gegebenenfalls fatalen Folgen.

Besonders gefährlich ist der Vorgang, wenn der eingedrungene Fremdkörper zwar das Reifensensorelement zerstört, der Reifen aber noch keinen nennenswerten Druckverlust aufweist. Würde der Fahrer bei einer Inaktivmeldung des Sensorelements den Reifendruck prüfen, würde er nahezu keinen Druckverlust feststellen. Bei der Weiterfahrt würde sich der Fremdkörper lockern und herausfallen. Erst dann ergäbe sich ein plötzlicher Druckverlust, der für den Fahrer ohne weitere Anzeige zunächst unbemerkt bliebe.

Mit den erfindungsgemäßen Lösungsvorschlägen sind diese Probleme auf einfache und zugleich kostengünstige Weise um ein hohes Maß reduziert. So wird auf einfache Weise mit der Erfindung eine erhebliche Verbesserung der Fahrsicherheit bei Reifendefekten an Fahrzeugen mit Reifendruckkontrollsystem erreicht.

Nachfolgend werden Ausführungsbeispiele der erfindungsgemäßen Lösung anhand der beigefügten schematischen Zeichnungen näher erläutert. Es zeigt:
Fig.1 teilweise einen Querschnitt eines Ausführungsbeispiels eines erfindungsgemäßen Reifens nebst dort angeordnetem Sensorelement,
Fig.2 das Detail III der Anordnung des Sensorelements in Fig.1,
Fig.3 eine Variante der Anordnung des Sensorelements gemäß Fig.1,
Fig.4 teilweise einen Querschnitt eines weiteren Ausführungsbeispiels eines erfindungsgemäßen Reifens nebst dort angeordnetem Sensorelement und
Fig.5 teilweise einen Querschnitt eines Reifens mit einem weiteren Sensorelement.

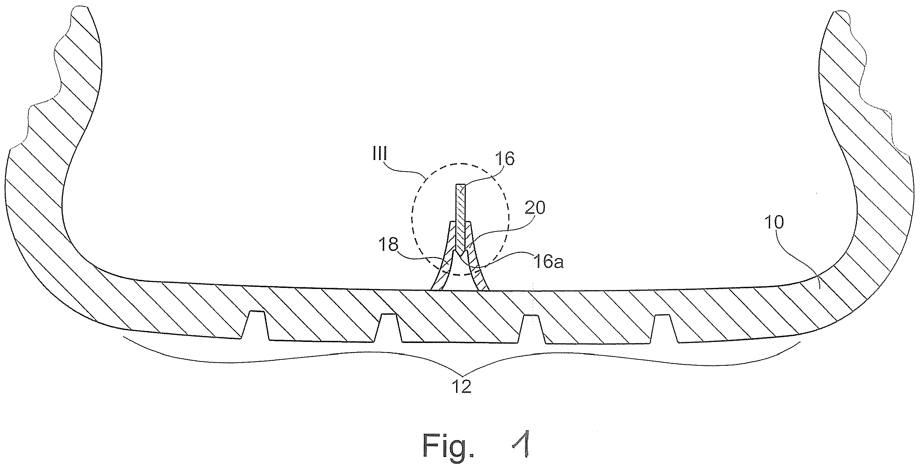

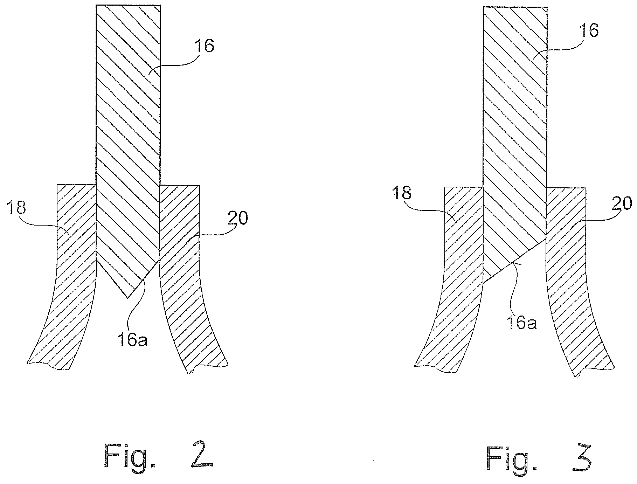

In Fig. 1 ist ein Reifen 10 mit seiner geschnitten dargestellten Reifenhülle gezeigt, welche eine Lauffläche 12 aufweist, mit der der Reifen 10 im Betrieb auf einer Fahrfläche 14 abrollt. An der Lauffläche 12 ist radial innenseitig ein Sensorelement 16 mittels zweier radial nach innen von der Lauffläche 12 abstehender, elastischer Laschen 18 und 20 befestigt. Das Sensorelement 16 ist dabei plattenförmig gestaltet und vorliegend in radialer Richtung bzw. lotrecht zum benachbarten Laufflächenbereich 12a angeordnet. Auf diese Weise ist die Angriffsfläche am Sensorelement 16 für einen die Lauffläche 12 durchstechenden Gegenstand, wie etwa einen Nagel, im Vergleich zu einer parallel bzw. axial ausgerichteten Anordnung des Sensorelements 16 an der Lauffläche 12 bereits erheblich verringert. Das Sensorelement 16 ist ferner an der Lauffläche 12 elastisch angebracht, so dass es im Fall einer Fremdeinwirkung durch einen eindringenden Gegenstand diesem Gegenstand unter Umständen auch noch ausweichen kann. Hilfreich dabei ist, dass das Sensorelement 16 an seiner radial nach außen, zum benachbarten Laufflächenbereich 12a gerichteten Seite eine bezogen auf diesen Laufflächenbereich 12a schräg gestellte Außenfläche 16a aufweist. An dieser schrägen Außenfläche 16a gleiten eindringende Gegenstände derart ab, dass sie das Sensorelement 16 weitestgehend verschont belassen. Fig.2 und Fig.3 zeigen zwei Varianten des derartigen Sensorelements 16, wobei bei der Variante der Fig.2 die Außenfläche 16a zu ihrem Zentrum hin spitz zulaufend gestaltet ist, während bei der Variante gemäß Fig.3 sich die Schrägung der Außenfläche 16a von einem Rand ausgehend bis hin zum gegenüberliegenden Rand erstreckt.

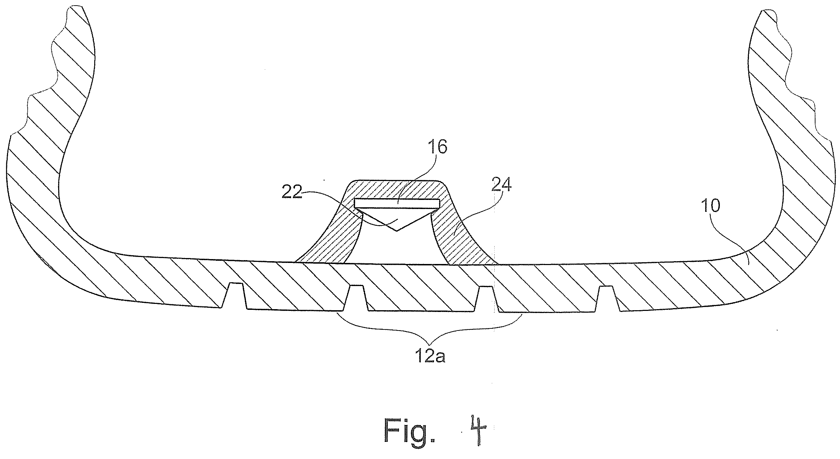

Bei dem Ausführungsbeispiel gemäß Fig.4 ist an der der Lauffläche 12 zugewandten Seite des Sensorelements 16 ein Abweiskegel 22 ausgebildet, der zusätzlich aus einem metallischen Material hergestellt ist und auf diese Weise als Abweiser und als Schutzschicht für dahinter liegende (nicht im Detail dargestellte) elektronische Bauteile dient. Das Sensorelement 16 ist dabei (sofern dies technisch zwingend notwendig ist) in einem Becher 24 gehalten und im Wesentlichen parallel zum benachbarten Laufflächenbereich 12a ausgerichtet.

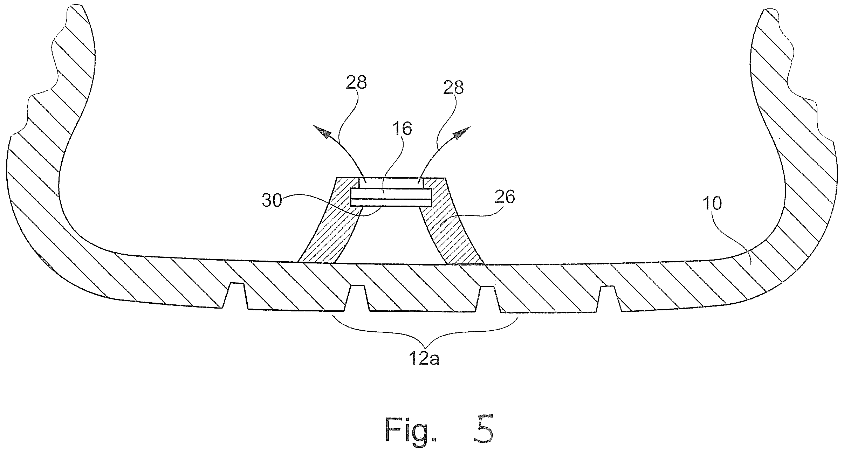

Ferner zeigt Fig.5 eine Sensorelement-Halterung mittels eines Rings 26, aus dem heraus das Sensorelement 16 in Richtung von Pfeilen 28 ausklappbar ist.

## Patentansprüche

1. Reifen (10) eines Fahrzeugs, mit einer Lauffläche (12) zum Abrollen auf einer Fahrfläche (14) und einem plattenförmigen Sensorelement (16), welches radial innenseitig an der Lauffläche (12) angeordnet ist,
**dadurch gekennzeichnet, dass** das Sensorelement (16) an seiner dem benachbarten Laufflächenbereich (12a) zugewandten Seite (16a) mit einer zu diesem Laufflächenbereich (12a) schräg gestellten Außenfläche (16a, 22) gestaltet und mit einer durchstichhemmenden Schutzschicht (22; 30) versehen ist.

2. Reifen nach Anspruch 1,
**dadurch gekennzeichnet, dass** das Sensorelement (16) durch Fremdeinfluss klappbar gehaltert ist.

3. Plattenförmiges Reifen-Sensorelement (16) zum Anordnen an einer Lauffläche (12) eines Reifens eines Fahrzeugs,
**dadurch gekennzeichnet** das Sensorelement (16) an seiner dem benachbarten Laufflächenbereich (12a) zugewandten Seite (16a) mit einer durchstichhemmenden Schutzschicht (22; 30) versehen und mit einer zu diesem Laufflächenbereich (12a) schräg gestellten Außenfläche (16a, 22) gestaltet ist.

4. Reifen-Sensorelement (16) nach Anspruch 3,
**dadurch gekennzeichnet, dass** die schräg gestellte Außenfläche als Abweiskegel (22) ausgebildet ist.

## Claims

1. A tyre (10) of a vehicle, having a tread (12) for rolling on a driving surface (14) and a plate-shaped sensor element (16) which is arranged radially inside on the tread (12), **characterised in that** the sensor element (16) is formed on its side (16a) facing the adjacent tread region (12a) with an outer surface (16a, 22) which is positioned obliquely with respect to this tread region (12a), and is provided with a puncture-inhibiting protective layer (22; 30).

2. A tyre according to claim 1, **characterised in that** the sensor element (16) is mounted such that it can fold away under an external influence.

3. A plate-shaped tyre sensor element (16) to be arranged on a tread (12) of a tyre of a vehicle, **characterised in that** the sensor element (16) is provided on its side (16a) facing the adjacent tread region (12a) with a puncture-inhibiting protective layer (22; 30) and is configured with an outer surface (16a, 22) positioned obliquely with respect to this tread region (12a).

4. A tyre sensor element (16) according to claim 3, **characterised in that** the obliquely positioned outer surface is formed as a deflection cone (22).

## Revendications

1. Pneumatique de véhicule (10) comprenant une bande d'usure (12) destinée à rouler sur une surface de roulement (14) et un élément de détection (16) en forme de plaque qui est monté radialement sur la face interne de la bande d'usure (12),
**caractérisé en ce que**
l'élément de détection (16) est équipé sur son côté (16a) tourné vers la zone de la bande d'usure voisine (12a) d'une face externe (16a, 22) s'étendant obliquement vers cette zone de bande de roulement (12a), et est muni d'une couche de protection (22, 30) ralentissant la perforation.

2. Pneumatique conforme à la revendication 1,
**caractérisé en ce que**
l'élément de détection (16) est maintenu rabattable sous l'action d'une influence extérieure.

3. Elément de détection de pneumatique en forme de plaque (16) destiné à être monté sur une bande d'usure (12) d'un pneumatique de véhicule,
**caractérisé en ce qu'**
il est équipé, sur sa face (16a) tournée vers la zone (12a) voisine de la bande d'usure d'une couche de protection (22, 30) ralentissant le poinçonnage (22, 30) et comporte une surface externe (16a, 22) s'étendant obliquement vers cette zone (12a) de la bande d'usure.

4. Elément de détection de pneumatique (16), conforme à la revendication 3,
**caractérisé en ce que**
la surface externe s'étendant obliquement est réalisée sous la forme d'un cône de renvoi (22).
